# EUROPEAN PATENT APPLICATION

(11) **EP 2 602 474 A2**
(43) Date of publication of application: **12.06.2013**
(21) Application number: 12194614.9
(22) Date of filing: 28.11.2012
(51) Int. Cl.: F02M 47/02

(54) **Two-way needle control valve**

(30) Priority: 06.12.2011 US 201161567197 P
(71) Applicant: International Engine Intellectual Property Company, LLC, Lisle, Illinois 60532 (US)
(72) Inventor: Hansen, Erik Jordan, Elgin, SC 29045 (US); Shulz, Keith Steven, Columbia, SC 29223 (US); Cai, Guodong, Itasca, IL 60143 (US); Mohammed, Qursheed Hussain, Columbia, SC 29203 (US)
(74) Representative: Kuhnen & Wacker

(57) **Abstract**

A two-way needle (212) control valve for controlling the position of the needle of a needle valve in a fuel injector is disclosed. A poppet member (224) configured for displacement between an open position and a closed position in a valve bore (232) of a valve body. The valve bore (232) includes drain (254) for draining fuel from valve when valve is open. The valve includes a supply line (242) that extends across at least a portion of the valve body. The supply line receives fuel from a high pressure fuel line. An inlet throttle line (244) is in fluid communication with the supply line, and delivers fuel from the supply line to a control chamber in a throttle plate (246). An outlet throttle line delivers fuel from the control chamber (252) to a valve body inlet line, which is configured to deliver fuel to the cavity (258) in the valve bore (232).

## Description

### RELATED APPLICATONS

The present application claims priority to U.S. Patent Application No. 61/567,197, having a filing date of December 6, 2011, which is incorporated herein by reference in its entirety.

### BACKGROUND

High-pressure fuel injection systems are often used in combustion engines to deliver fuel to a combustion chamber. Fuel may be supplied through a common rail to a series of unit fuel injectors. The fuel injectors typically utilize a needle valve to inject fuel into the combustion chamber. When pressurized fuel that will be injected into the combustion chamber is supplied to a nozzle chamber of the injector, the pressurized fuel may act against a needle of the needle valve in a direction that attempts to lift the needle to an open position. To counteract such forces, fuel injectors may include an area above the needle where a control volume of pressurized fuel is accumulated. This control volume provides a force against an upper surface of the needle that at least assists in preventing the pressurized fuel from lifting the needle. When fuel in the nozzle chamber is to be injected into the combustion chamber, the control volume may be drained so as to remove or reduce this force above the needle, thereby allowing the pressurized fuel in the nozzle chamber to lift the needle from the valve seat. When fuel injection is to stop, a control volume of fuel may again accumulate above the needle to again provide a force to at least assist in counteracting the force on the needle from the fuel pressure in the nozzle chamber, and thereby, with the assistance of a spring, move the needle back to the closed position.

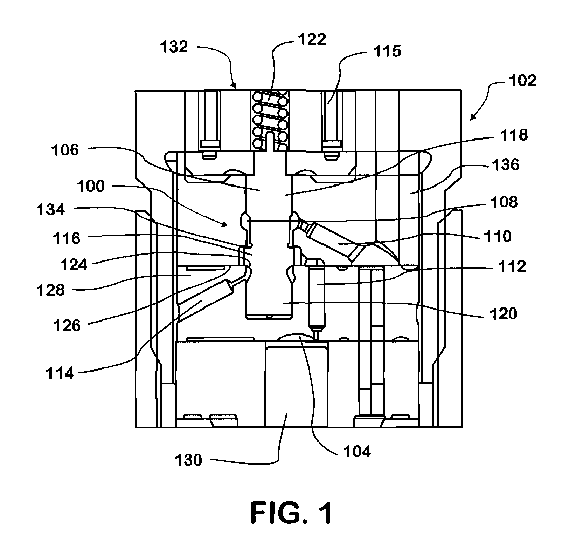

Figure 1 illustrates a cross section of a typical three-way needle control valve 100 in a fuel injector 102 that is used to control the supply and removal of a control volume of fuel to/from a control chamber 104. The control valve 100 includes a poppet member 106, a valve bore 108, and a first, second, and third fuel pathway 110, 112, 114. The poppet member 106 includes a poppet projection 116 and upper and lower guides 118, 120. When the poppet member 106 is in a closed position, a spring 122 may press a first surface 124 of the poppet projection 116 against an upper surface 126 of a throttle plate 128 so as to create a seal that prevents the flow of fuel into the third fuel passageway 114. Fuel may then flow from the first fuel pathway 110, into the valve bore 108, and through the second fuel pathway 112 to the control chamber 104. Fuel in the control chamber 104 may exert a force on the needle 130 to prevent pressurized fuel in the nozzle chamber from lifting the needle 130 to an open position.

When fuel is to be injected into the combustion chamber, electrical current flows through a coil 115 of a solenoid 132 to draw an armature 134, and the attached poppet member 106, to the solenoid 132, thereby moving the poppet member 106 to an open position. Movement of poppet member 106 may be guided by upper and lower guides 118, 120 along portions of the valve bore 108 in the throttle plate 128 and the valve body 136, respectively. When in the open position, the first surface 124 of the poppet projection 116 is lifted from the upper surface 126 of the throttle plate 128. Pressure differentials may draw the control volume of fuel from the control chamber 104, through the second fuel pathway 112 and the valve bore 108, and into the third pathway 114, where the fuel may then be delivered to a low pressure area. Additionally, when in the open position, a second surface 134 of the poppet projection 116 abuts against a surface of the valve bore 108 in the valve body 136 to prevent fuel from the first fuel pathway 110 from entering into the second pathway 112.

Three-way needle control valves 100 typically require that the valve bore 108 extend between the valve body 136 and the throttle plate 128. Yet, given the tight dimensional tolerances required for the control valve 100 to provide the necessary seals, such constructions have a tendency to have potential alignment issues, such as between the upper and lower guides 118, 120 with the adjacent portions of the valve bore 108. Such alignment issues may interfere with the movement of the poppet member 106, which can hinder the response time for the movement of the needle 130 to begin and terminate the injection of fuel into the combustion chamber.

### SUMMARY

According to certain embodiments, a two-way needle control valve is provided for use in a fuel injector. The two-way needle control valve incudes a single type poppet member configured to be displaced between an open position and a closed position in a valve bore of a valve body. The valve bore includes a drain. A supply line extends across at least a portion of the valve body. The supply line is configured to receive fuel from a high pressure fuel line. An inlet throttle line is in fluid communication with the supply line. The inlet throttle line is configured for the delivery of fuel from the supply line to a control chamber in a throttle plate. Further, an outlet throttle line is configured for the delivery of fuel from the control chamber to a valve body inlet line, the valve body being configured for the delivery of fuel received from the outlet throttle line to a cavity in the valve bore.

Additionally, according to certain embodiments, a two-way needle control valve is provided for use in a fuel injector that also includes a single poppet member, the single type poppet member having a first portion, a second portion, and a sealing surface. A valve also includes a valve body having a supply line, a valve body supply line, a drain, and a valve bore. The valve bore has a cavity and a valve body seal surface. The valve body supply line is in fluid communication with the cavity. The single poppet member is configured for slidable displacement within the valve bore between an open position and a closed position. The sealing surface abuts the valve body seal surface when the poppet member is in a closed position. The drain is in fluid communication with the chamber when the poppet member is in an open position. Additionally, the valve also includes a throttle plate having an inlet throttle line, an outlet throttle line, and a control chamber. The inlet throttle line extends from the supply line to the control chamber, while the outlet throttle line extends from the control chamber to the valve body supply line.

Additionally, according to certain embodiments, a two-way needle control valve is provided for use in a fuel injector that has a valve body having a valve bore and a valve body inlet line. The valve bore has a cavity that is in fluid communication with a valve body inlet line. The valve also includes a poppet member having a first portion, a second portion, and a sealing surface. The first portion has a smaller diameter than the second portion. The poppet member is configured for slidable displacement within the valve bore between open and closed positions. The two-way needle control valve further includes a throttle plate having an inlet throttle line, an outlet throttle line, and a chamber. Further, the supply line is configured to receive fuel from a high pressure line in the fuel injector. The throttle inlet line is configured for the delivery of fuel from the supply line to the control chamber. Additionally, the outlet throttle line is configured for the delivery of fuel from the control chamber to the valve body inlet line. The valve body inlet line is configured for the delivery of fuel to the cavity. When the poppet member is in a closed position, the sealing surface of the poppet member and a valve body seal surface of the valve body are operably engaged to prevent the flow of fuel from the cavity to the drain. When the poppet member is in an open position, the sealing surface of the poppet member and a valve body seal surface are at least partially separated to allow fuel from the cavity to flow through the drain.

### BRIEF DESCRIPTION OF THE DRAWINGS

Figure 1 illustrates a cross section of a typical three-way needle control valve in a fuel injector that is used to control the supply and removal of a control volume of fuel to a control chamber.

Figure 2 illustrates a cross section of a fuel injector having a two-way needle control valve according to an illustrated embodiment.

Figure 3 illustrates a cross section of a portion of a fuel injector having a two-way needle control valve according to an illustrated embodiment.

Figure 4 illustrates a cross section of a portion of a fuel injector having a two-way needle control valve according to an illustrated embodiment.

### DETAILED DESCRIPTION

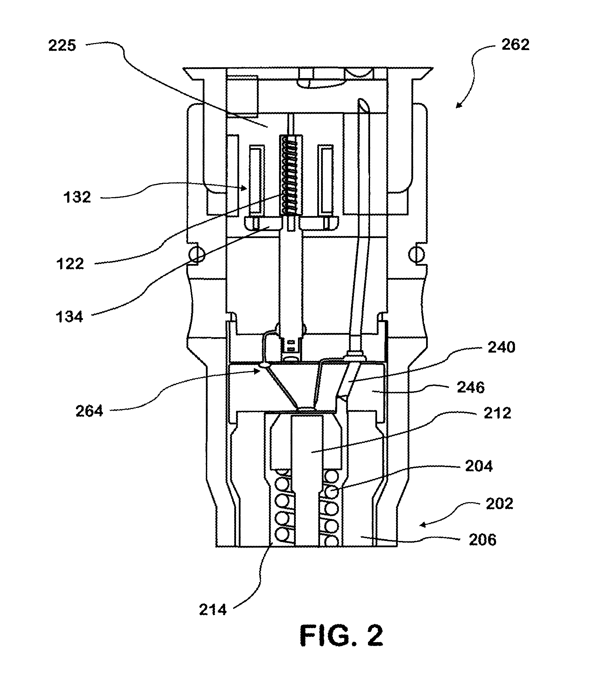

Figure 2 illustrates a cross sectional view of a portion a high pressure fuel injector 262. High-pressure fuel injectors 262 generally include a nozzle section 202. The nozzle section 202 includes a spring 204 and a nozzle body 206. The nozzle body 206 and a throttle plate 246 define a longitudinal bore that terminates in a nozzle orifice at the end or bottom of the fuel injector 262. A nozzle valve, such as a needle valve, is configured so that a needle 212 of the needle valve is slideably disposed in the longitudinal bore for movement between a first (closed) position that blocks fluid communication between a nozzle chamber 214 and the nozzle orifice, and a second (open) position that opens fluid communication between the nozzle chamber 214 and the nozzle orifice. The spring 204 is positioned in the nozzle chamber 214 and acts against the needle 212 so as to bias the needle 212 to its first (closed) position.

During operation, fuel flows through a high pressure fuel line 240 in the throttle plate 246 and into the nozzle chamber 214. When the needle 212 is to be unseated from the valve seat, such as by activation of a needle control valve solenoid 225, the needle 212 is lifted from the valve seat and fuel passes through the orifice 210 and is delivered to the associated engine combustion chamber.

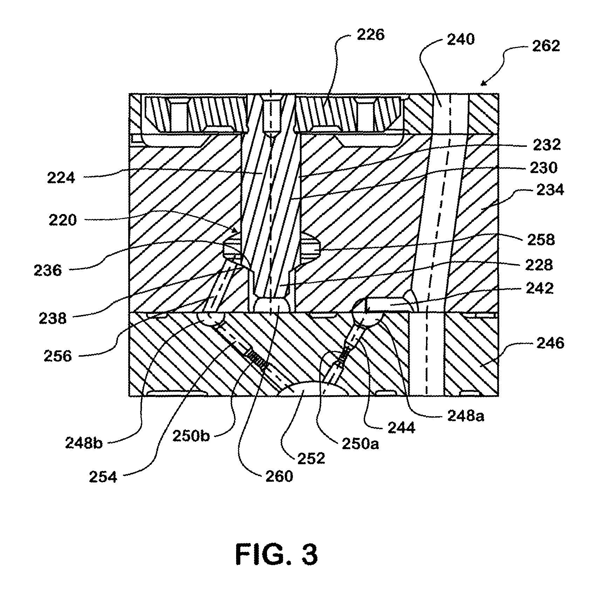

Figure 3 illustrates a cross section of a portion of a fuel injector 262 having a two-way needle control valve 220 according to an illustrated embodiment. Unlike typical three-way needle control valves, the two way needle control valve 220 in the illustrated embodiment includes a single poppet member 224 rather than a dual poppet member 106. The single poppet member 224 is operably connected to an armature 226 that is controlled by a needle control valve solenoid 225. More specifically, when electrical current flows through a coil in the needle control valve solenoid 225, a magnetic field is created that pulls the armature 226 toward the solenoid 225, thereby moving the single poppet member 224 from a close position to an open position. The delivery of electrical current to the coil may be controlled by an engine control unit or module.

The single poppet member 224 includes a first portion 228 and a second portion. As shown in Figure 3, the first portion 228 has a diameter that is smaller than the diameter of the second portion. The second portion 230 may provide a guide for the movement of the poppet member 224 along a valve bore 232 in the valve body 234 as the poppet member 224 is displaced between closed and open positions, and vice versa. According to certain embodiments, the second portion may be sized to have minimal clearance between the valve bore and the second portion, such as, for example a radial clearance of around 0.250 mm, among others. According to certain embodiments, the differences in sizes between the first and second portions 228, 230 of the poppet member 224 may provide a sealing surface 236 for the single poppet member 224 as well as eliminate potential alignment issues otherwise caused by the first portion 228 contacting a wall of the valve bore 232.

The sealing surface 236 of the single poppet member 224 engages a mating valve body seal surface 238 in the valve bore 232 along the valve body 234. As shown in Figure 3, according to certain embodiments, the sealing surface 236 of the poppet member 224 may be positioned between the first and second portions 228, 230 of the poppet member 224. For example, the sealing surface 236 may provide a transition between the first portion 228 and the second portion 230. In the embodiment illustrated in Figure 3, the sealing surface 236 is an angled transition surface of the single poppet member 224 that extends from the outer surface of the first portion 228 to the outer surface of the second portion 230. According to such an embodiment, the mating valve body seal surface 238 may also have a similar opposing angled configuration. However, according to other embodiments, the sealing surface 236 may be a side wall of the second portion 230 that extends above or beyond the outer surface of first portion 228, such as, for example, a flat wall, among other configurations.

During use, high pressure fuel, such as, for example, fuel at 3000 bar, flows through a high pressure fuel line in the valve body 234. At least a portion of the high pressure fuel in the high pressure fuel line 240 may be diverted through a supply line 242 into an inlet throttle line 244 in the throttle plate 246. As shown in Figure 3, at least a portion of the supply line 242 may be formed in the valve body 234 adjacent to an upper surface of the throttle plate 246. The supply line 242 may deliver the diverted fuel to the mouth 248a of the inlet throttle line 244. As shown in Figure 3, according to certain embodiments, the mouth 248a may have a semi-circular shape that is configured to at least assist in aligning the supply line 242 with the inlet throttle line 244. The inlet throttle line 244 may also include a necked region 250a that constricts the size of the inlet throttle line 244 so as to at least partially reduce the pressure of the diverted fuel before the diverted fuel is delivered to a control chamber 252.

The control chamber 252 is configured to provide an area for the accumulation of a control volume of fuel above the needle 212 of the needle valve. Moreover, the control chamber 252 is configured such that, when the control valve is in a closed position, a sufficient quantity of a control volume of fuel is in the control chamber 252 to exert a force on the needle 212 that at least assists in counteracting the forces exerted on the needle 212 by pressurized fuel in the nozzle chamber 214 so as to keep the needle 212 in a closed position seated on the valve seat 222.

The control chamber 252 is also in fluid communication with an outlet throttle line 254. The outlet throttle line 254 includes a necked region 250b for a further reduction in the pressure of the fuel that has flowed out of the control chamber 252. The outlet throttle line 254 also includes a mouth 248b that generally aligns the outlet throttle line 254 with a valve body inlet line 256. The valve body inlet line 256 delivers fuel from the outlet throttle line 254 to a cavity 258 in the valve bore 232.

During use, when the poppet member 224 is in a closed position, diverted fuel may accumulate in the cavity 258, valve body inlet line 256, and outlet throttle line 254 so that the control volume of fuel in the control chamber 252 retains a sufficient pressure to at least assist in preventing the needle 212 from being lifted from the valve seat. According to certain embodiments, the inlet and outlet throttle lines 244, 254 may be relatively short and close to the control chamber 252 so as to allow quick response times as to when pressure is to be relieved and/or increased in the control chamber 252 as the poppet member 224 is to be moved from open and closed positions, and vice versa.

By reducing the pressure of the fuel through the necking regions 250a, 250b, the fuel enters the cavity at a pressure that has been significantly reduced from the initial pressure of the fuel in the high pressure fuel line 240, which, for some injection systems, may have been for example, at around 3000 bar. As the pressure drop through the throttle line may be a function of the injection pressure, the degree of pressure reduction may differ for different engine operating conditions. For example, depending on engine operating conditions, the pressure may be reduced by as much as half of the injection pressure in that cavity. Such a reduction in the fuel pressure in the cavity 258 may allow for the use of a smaller poppet member 224, which may thereby also reduce the weight of the poppet member 224. Such size and/or weight reductions may improve the response time of the two-way needle control valve 220, as the lighter and/or smaller poppet member 224 may be able to be moved faster from the open and closed position, and vice versa. Additionally, a reduction in the size of the poppet member 224 and the associated valve bore 232 may also equate to smaller, if any, leaks, from the two-way needle control valve 220.

When fuel is to be injected into the ignition chamber, the needle control valve solenoid 225 is activated, thereby causing the armature 226 to be drawn toward the solenoid 225. As the single poppet member 224 is attached to the armature 226, such as, for example, by a press fit, the movement of the armature 226 results in the single poppet member 224 being displaced from the closed position to an open position. When moved to an open position, the sealing surface 236 of the single poppet member 224 is lifted away from the mating seal surface 238 in the valve body 234, thereby providing a pathway for fuel in, or flowing into the cavity 258, to flow to a drain 260 in the two-way control needle control valve 220. The drain 260 may lead to a relatively low pressure area, such as, for example, an area having a pressure of about 1 bar to 10 bar. Accordingly, a pressure differential between the pressure of the fuel in, or being delivered to, the cavity 258 and the pressure of the drain 260 may influence the flow of fuel out of two-way needle control valve 220 through the drain 260. According to certain embodiments, the drain 260 may be used in the delivery of the fuel to a fuel tank, or an inlet for a high or low pressure pump, among other locations.

When the fuel injection process is to be terminated, the supply of electrical current to the coil of the solenoid 225 may be stopped, causing the armature 226 to no longer be drawn to the needle control valve solenoid 225. The needle 212 may then begin to be moved toward the closed position by the biasing force of the spring 204. The sealing surface 236 of the poppet member 224 may then engage the mating valve body seal surface 238 in the valve bore 232. With the sealing surface 236 of the poppet member 224 abutting the valve body seal surface 238 of the valve bore 232, fuel may no longer flow from the cavity 258 to the drain 260. Accordingly, fuel pressure in the control chamber 252 may again rise so as to exert a downward force on the needle 212. This downward force may assist in moving and/or retaining the needle 212 in a close position in which the needle 212 is seated against the valve seat 222.

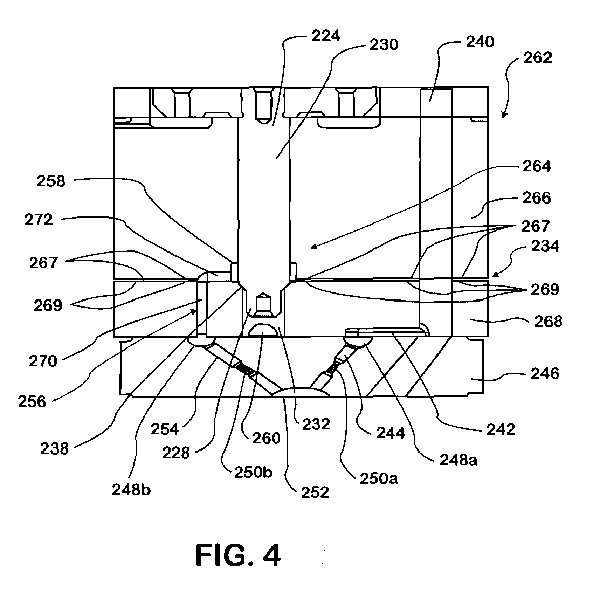

Figure 4 illustrates a cross section of a portion of a fuel injector 262 having a two-way needle control valve 264 according to an illustrated embodiment. As shown, according to certain embodiments, the valve body 234 previously shown in Figure 3 may have an upper body portion 266 and a lower body portion 268. At least a portion of a lower surface 267 of the upper portion 266 may be pressed into an abutting engagement with an upper surface 269 of the lower body portion 268 so as to prevent the leakage of fuel between the upper and lower body portions 266, 268.

According to such an embodiment, rather than using the angled valve body inlet line 256 shown in Figure 3, the valve body inlet line 256 may have a lower line 270 in the lower body portion that is in fluid communication with an upper line 272 that extends across at least a portion of the intersection between the upper and lower body portions 266, 268, as shown in Figure 4. Further, the lower line 270 and upper line 272 may be generally perpendicular to each other. Additionally, according to such an embodiment, at least a portion of the cavity 258 may be positioned along the intersection of the upper and lower body portions 266, 268. Such a configuration may allow for the upper line 272 to extend generally straight across the intersection of the upper and lower body portions 266, 268 and directly into the cavity 258. Further, according to the embodiment illustrated in Figure 4, the valve body seal surface 238 may be positioned at an inlet portion of the portion of the valve bore 232 that extends into the lower body portion 268, and below the intersection of the upper line 272 and the cavity 258. Moreover, as such a configuration eliminates the angled intersection between the valve body inlet line 256 and the cavity 258, as shown in Figure 3, such an embodiment may eliminate the potential for the formation of high stresses in the valve body 234 at the comer(s) of that intersection.

## Claims

1. A two-way needle control valve for use in a fuel injector comprising:
a single poppet member configured to be displaced between an open position and a closed position in a valve bore of a valve body, the valve bore including a drain;
a supply line extending across at least a portion of the valve body, the supply line configured to receive fuel from a high pressure fuel line;
an inlet throttle line in fluid communication with the supply line, the inlet throttle line configured for the delivery of fuel from the supply line to a control chamber in a throttle plate; and
an outlet throttle line configured for the delivery of fuel from the control chamber to a valve body inlet line, the valve body configured for the delivery of fuel received from the outlet throttle line to a cavity in the valve bore.

2. The two-way needle control valve of claim 1, wherein the single poppet member has a first portion, a second portion, and a sealing surface, the sealing surface providing a transition surface between the first portion and second portion that is configured to engage a valve bore seal surface in the valve body that is configured to prevent the flow of fuel to the drain when the single poppet member is in a closed position.

3. The two-way needle control valve of claim 1, wherein the valve body has an upper body portion and a lower body portion, the cavity being located in at least a portion of the upper body portion above the valve bore seal surface.

4. The two-way needle control valve of claim 3, wherein the valve body inlet line has an upper line and a lower line, the upper and lower lines being joined together at an approximately 90 degree angle.

5. The two-way needle control valve of claim 1, wherein the inlet throttle line has a necked region configured to reduce the pressure of fuel from the supply line.

6. The two-way needle control valve of claim 5, wherein the outlet throttle line has a necked region configured to reduce the pressure of fuel received by the outlet throttle line from the control chamber.

7. A two-way needle valve for use in a fuel injector comprising:
a single poppet member having a first portion, a second portion, and a sealing surface;
a valve body having a supply line, a valve body supply line, a drain, and a valve bore, the valve bore having a cavity and a valve body seal surface, the valve body supply line being in fluid communication with the cavity, the single poppet member configured for slidable displacement within the valve bore between an open position and a closed position, the sealing surface abutting the valve body seal surface when the poppet member is in a closed position, the drain being in fluid communication with the chamber when the poppet member is in an open position; and
a throttle plate having an inlet throttle line, an outlet throttle line, and a control chamber, the inlet throttle line extending from the supply line to the control chamber, the outlet throttle line extending from the control chamber to the valve body supply line.

8. The two-way needle control valve of claim 7, wherein the valve body has an upper body portion and a lower body portion, the cavity being located in at least a portion of the upper body portion above the valve bore seal surface.

9. The two-way needle control valve of claim 8, wherein the valve body inlet line has an upper line and a lower line, the upper and lower lines being joined together at an approximately 90 degree angle.

10. The two-way needle control valve of claim 7, wherein the inlet throttle line has a necked region configured to reduce the pressure of fuel supplied from to the inlet throttle line from the supply line.

11. The two-way needle control valve of claim 10, wherein the outlet throttle line has a necked region configured to reduce the pressure of fuel received by the outlet throttle line from the control chamber.

12. A two-way control valve for use in a fuel injector comprising:
a valve body having a valve bore and a valve body inlet line, the valve bore having a cavity that is in fluid communication with a valve body inlet line;
a poppet member having a first portion, a second portion, and a sealing surface, the first portion having a smaller diameter than the second portion, the poppet member configured for slidable displacement within the valve bore between open and closed positions; and
a throttle plate having an inlet throttle line, an outlet throttle line, and a chamber;
wherein the supply line is configured to receive fuel from a high pressure line in the fuel injector, the inlet throttle line being configured for the delivery of fuel from the supply line to the control chamber;
wherein the outlet throttle line is configured for the delivery of fuel from the control chamber to the valve body inlet line, the valve body inlet line configured for the delivery of fuel to the cavity;
and wherein when the poppet member is in a closed position the sealing surface of the poppet member and a valve body seal surface of the valve body are operably engaged to prevent the flow of fuel from the cavity to the drain; and
wherein when the poppet member is in an open position, the sealing surface of the poppet member and a valve body seal surface are at least partially separated to allow fuel from the cavity to flow through the drain.

13. The two-way needle control valve of claim 12, wherein the valve body has an upper body portion and a lower body portion, the cavity being located in at least a portion of the upper body portion above the valve bore seal surface.

14. The two-way needle control valve of claim 13, wherein the valve body inlet line has an upper line and a lower line, the upper and lower lines being joined together at an approximately 90 degree angle.

15. The two-way needle control valve of claim 7, wherein the inlet throttle line and outlet throttle lines each have a necked region configured to reduce the pressure of fuel flowing through the inlet throttle line and through the outlet throttle line.
